# EUROPÄISCHE PATENTANMELDUNG

(11) **EP 1 619 480 A1**
(43) Veröffentlichungstag der Anmeldung: **25.01.2006**
(21) Anmeldenummer: 05010849.7
(22) Anmeldetag: 19.05.2005
(51) Int. Cl.: G01F 1/58

(54) **Magnetisch-induktives Durchflussmessgerät und Verfahren zum Herstellen eines Messrohrs für ein magnetisch-induktives Durchflussmessgerät**

(30) Priorität: 15.07.2004 DE 102004034511; 26.07.2004 DE 102004036192
(71) Anmelder: KROHNE MESSTECHNIK GMBH & CO. KG, 47058 Duisburg (DE); FRIATEC AG, 68229 Mannheim (DE)
(72) Erfinder: Bitz, Günther, 68229 Mannheim (DE); Mayer, Helmut, 69168 Wiesloch (DE); Arens, Ernst, 47441 Moers (DE); Seidel, Andreas, 46562 Voerde (DE); Stevens, Udo, 97502 Euerbach (DE)
(74) Vertreter: Gesthuysen, von Rohr & Eggert

(57) **Zusammenfassung**

Dargestellt und beschrieben sind ein magnetisch-induktives Durchflußmeßgerät und ein Verfahren zum Herstellen eines Meßrohrs für ein magnetisch-induktives Durchflußmeßgerät. Das magnetisch-induktive Durchflußmeßgerät weist ein keramisches Meßrohr (1) zum Führen eines Mediums, dessen Durchfluß gemessen werden soll, und eine Meßelektrode (2) auf, wobei die Meßelektrode (2) einen Cermet-Körper umfaßt, in der Wand des Meßrohrs (1) vorgesehen ist, auf ihrer dem Medium zugewandten Seite mit dem Medium galvanisch oder kapazitiv gekoppelt ist und auf ihrer dem Medium abgewandten Seite mit einer Meßleitung (3) verbunden ist. Erfindungsgemäß ist vorgesehen, daß die Querschnittsfläche des Cermet-Körpers an seinem dem Medium zugewandten Ende größer ist als an seinem dem Medium abgewandten Ende. Auf diese Weise wird eine Meßelektrode (2) bereitgestellt, die den jeweiligen Anforderungen an ihren beiden Enden trotz minimalem Materialeinsatz ohne weiteres entsprechen kann.

## Beschreibung

Die Erfindung betrifft eine magnetisch-induktives Durchflußmeßgerät, mit einem keramischen Meßrohr zum Führen eines Mediums, dessen Durchfluß gemessen werden soll, und einer Meßelektrode, wobei die Meßelektrode einen Cermet-Körper aufweist, in der Wand der Meßrohrs vorgesehen ist, auf ihrer dem Medium zugewandten Seite mit dem Medium galvanisch oder kapazitiv gekoppelt ist und auf ihrer dem Medium abgewandten Seite mit einer Meßleitung verbunden ist. Die Erfindung betrifft ferner ein Verfahren zum Herstellen eines Meßrohrs für ein magnetisch-induktives Durchflußmeßgerät.

Magnetisch-induktive Durchflußmeßgeräte der eingangs genannten Art sind schon seit langer Zeit gut bekannt und werden in vielfältigen unterschiedlichen Einsatzgebieten verwendet. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektrodynamischen Induktion zur Strömungsgeschwindigkeitsmessung anzuwenden.

Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Spannung.

Die Meßelektroden werden im allgemeinen derart ausgeführt, daß sie entweder galvanisch oder kapazitiv mit dem strömenden Medium gekoppelt sind.

Auf ihrer dem Medium abgewandten Seite sind sie dann mit einer Meßleitung verbunden, um das abgegriffene elektrische Potential einer Auswerteeinrichtung zuführen zu können.

Die Verwendung von Cermet-Körpern für die Meßelektroden, unter die vorliegend alle Elektroden fallen sollen, die bei einem Meßrohr eines magnetisch-induktiven Durchflußmeßgeräts vorgesehen sein können, wie z. B. auch Referenzelektroden, ist gängige Praxis. Dabei wird z. B. ein Cermet-Körper aus Platin als Metall und Aluminiumoxid als Keramik verwendet, wobei das Verhältnis der Metallbestandteile zu den Keramikbestandteilen und deren Vermischung sowie die erzielte Mikrostruktur bei deren Verbindung derart gewählt werden, daß insgesamt ein leitfähiger Cermet-Körper für die Meßelektrode entsteht.

Cermet-Körper für Meßelektroden eines magnetisch-induktiven Durchflußmeßgeräts sind bisher hauptsächlich durch Extrudieren eines Metall/Keramik-Gemisches hergestellt worden. Durch Schneiden des damit erzielten Cermet-Strangs erhält man im wesentlichen stiftförmige Körper für die Meßelektroden, die z. B. in die Keramik für das Meßrohr eingepreßt werden können. Diese Vorgehensweise ist jedoch in mehrfacher Hinsicht nachteilig, da es beim Schneiden des Cermet-Strangs zum Bruch und damit zur Zerstörung von Meßelektroden kommen kann und darüber hinaus ein hoher Materialbedarf, insbesondere an Metall, wie dem teuren Platin, besteht.

Es ist damit die Aufgabe der Erfindung, ein derartiges magnetisch-induktives Durchflußmeßgerät sowie ein derartiges Verfahren zum Herstellen eines Meßrohrs für ein magnetisch-induktives Durchflußmeßgerät anzugeben, mit denen bei geringstmöglichem Metallbedarf eine derartige Meßelektrode bereitgestellt wird, die zum Abgriff einer in dem Medium induzierten Spannung geeignet ist und sich einfach und in abdichtender Weise in der Wand des Meßrohrs aus Keramik vorsehen läßt.

Ausgehend von dem eingangs beschriebenen magnetisch-induktiven Durchflußmeßgerät ist die zuvor hergeleitete und aufgezeigte Aufgabe dadurch gelöst, daß die Querschnittsfläche des Cermet-Körpers an seinem dem Medium zugewandten Ende größer ist als an seinem dem Medium abgewandten Ende.

Erfindungsgemäß wird also ein derartiger Cermet-Körper bereitgestellt, dessen Querschnittsfläche an seinem jeweiligen Ende genau den jeweiligen, dort gegebenen Anforderungen angepaßt ist. Für den galvanischen oder kapazitiven Abgriff einer in dem Medium induzierten Spannung ist es wichtig, daß eine vorbestimmte Querschnittsfläche der Meßelektrode nicht unterschritten wird. Für die elektrische Leitfähigkeit und damit auch für den Anschluß der Meßelektrode an eine Meßleitung ist jedoch ein wesentlich geringerer Querschnitt der Meßelektrode ausreichend, so daß erfindungsgemäß das dem Inneren des Meßrohrs zugewandte Ende des Cermet-Körpers im Querschnitt größer gehalten ist als sein anderes Ende.

Grundsätzlich kann dabei der Verlauf der Querschnittsfläche von einem Ende zum anderen Ende des Cermet-Körpers beliebig sein. Gemäß einer bevorzugten Weiterbildung der Erfindung ist jedoch vorgesehen, daß die Form der Querschnittsfläche des Cermet-Körpers von seinem dem Medium zugewandten Ende zu seinem dem Medium abgewandten Ende kontinuierlich geringer wird, jedenfalls jedoch niemals größer wird. Auf diese Weise wird eine maximale Materialeinsparung und damit ein minimaler Verbrauch des Metallbestandteils, wie des teuren Platins, ermöglicht. Insbesondere kommt dabei eine Kegelstumpfform oder eine Keilform für den Cermet-Körper in Betracht, wobei die Verringerung auf eine sehr kleine Querschnittsfläche an dem dem Medium abgewandten Ende des Cermet-Körpers eine erhebliche Materialeinsparung gegenüber den aus dem Stand der Technik bekannten stiftförmigen Cermet-Köryern bedeutet.

Grundsätzlich kann die Form der Querschnittsfläche des Cermet-Körpers beliebig sein. Gemäß einer bevorzugten Weiterbildung der Erfindung ist jedoch vorgesehen, daß die Form der Querschnittsfläche des Cermet-Körpers vielekkig ist. Gemäß einer ganz bevorzugten Weiterbildung der Erfindung kann dabei insbesondere vorgesehen sein, daß die Form der Querschnittsfläche des Cermet-Körpers an seinem dem Medium zugewandten Ende viereckig ist, vorzugsweise nämlich im wesentlichen rechteckig und ganz besonders bevorzugt im wesentlichen quadratisch.

Der Cermet-Körper der Meßelektrode kann auf verschiedene Weisen in dem keramischen Meßrohr vorgesehen sein. Gemäß einer bevorzugten Weiterbildung der Erfindung ist vorgesehen, daß der Cermet-Körper in das keramische Meßrohr eingepreßt ist. Gemäß einer alternativen bevorzugten Weiterbildung der Erfindung ist vorgesehen, daß der Cermet-Körper von dem keramischen Meßrohr umspritzt ist. Dabei kann insbesondere vorgesehen sein, daß auch der Cermet-Körper durch Spritzguß hergestellt ist, so daß das Meßrohr mit der Meßelektrode insgesamt in einem Zweikomponenten-Spritzgußverfahren hergestellt wird.

Als Materialien für den Cermet-Körper sind gemäß einer bevorzugten Weiterbildung der Erfindung Platin als Metallbestandteil und Aluminiumoxid als Keramikbestandteil vorgesehen, vorzugsweise in einem Volumenverhältnis von etwa 30 zu 70. Darüber hinaus können weitere Metallbestandteile oder/und Keramikbestandteile vorgesehen sein.

Für das keramische Meßrohr sind eine Vielzahl von Materialien verwendbar. Gemäß einer bevorzugten Weiterbildung der Erfindung ist jedoch vorgesehen, daß das keramische Meßrohr aus Aluminiumoxid oder/und dotiertem oder nicht dotiertem Zirkoniumoxid oder Mischungen in beliebigem Verhältnis aus diesen Komponenten besteht.

Schließlich ist gemäß einer bevorzugten Weiterbildung der Erfindung vorgesehen, daß zwei, vorzugsweise einander gegenüberliegende Meßelektroden mit jeweils einem Cermet-Körper, wie zuvor beschrieben, vorgesehen sind. Darüber hinaus können weitere Meßelektroden, wie eine Referenzelektrode, vorgesehen sein, die ebenfalls einen Cermet-Körper, wie zuvor beschrieben, aufweisen.

Das erfindungsgemäße Verfahren zum Herstellen eines Meßrohrs für ein magnetisch-induktives Durchflußmeßgerät ist durch folgende Schritte gekennzeichnet:
- Herstellung eines Cermet-Körpers für eine Meßelektrode durch plastische Formgebung oder Gießformgebung,
- Einpressen des unbearbeiteten Cermet-Körpers in eine Keramikmasse zur Herstellung des die Meßelektrode aufweisenden Meßrohrs.

Wesentlich ist dabei also, daß der Cermet-Körper für die Meßelektrode durch plastische Formgebung oder Gießformgebung hergestellt wird und dann ohne weitere Bearbeitung, insbesondere also ohne Materialabtrag, in die Keramikmasse für das Meßrohr des magnetisch-induktiven Durchflußmeßgeräts eingepreßt werden kann. Bezüglich dieses Einpressens wird auf die EP 0 987 233 Al verwiesen.

Alternativ ist ein erfindungsgemäßes Verfahren zum Herstellen eines Meßrohrs für ein magnetisch-induktives Durchflußmeßgerät durch folgende Schritte gekennzeichnet:
- Spritzgießen eines Cermet-Körpers für eine Meßelektrode,
- Umspritzen des unbearbeiteten Cermet-Körpers mit einer Keramikmasse zur Herstellung des die Meßelektrode aufweisenden Meßrohrs.

Das alternative erfindungsgemäße Verfahren entspricht also einem schon oben angesprochenen Zweikomponenten-Spritzgußverfahren, bei dem der Cermet-Körper durch Spritzgießen in seiner endgültigen Form hergestellt und anschließend von der Keramikmasse zur Herstellung des die Meßelektrode aufweisenden Meßrohr umspritzt wird.

Insbesondere gilt für die beiden zuvor beschriebenen erfindungsgemäßen Verfahren, daß der Cermer-Körper für die Meßelektrode bei der Herstellung durch plastische Formgebung oder Gießformgebung, wie durch Spritzgießen, direkt derart hergestellt werden kann, daß die Querschnittsfläche des Cermet-Körpers an seinem einen Ende größer ist als an seinem anderen Ende, was mit den schon weiter oben beschriebenen Vorteilen verbunden ist.

Im einzelnen gibt es nun eine Vielzahl von Möglichkeiten, das erfindungsgemäße magnetisch-induktive Durchflußmeßgerät sowie die erfindungsgemäßen Verfahren zum Herstellen eines Meßrohr für ein magnetisch-induktives Durchflußmeßgerät auszugestalten und weiterzubilden. Dazu wird einerseits auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1: ein Meßrohr für ein magnetisch-induktives Durchflußmeßgerät gemäß einem bevorzugten Ausführungsbeispiel der Erfindung im Querschnitt im Elektrodenbereich und
- Fig. 2: das Meßrohr gemäß dem bevorzugten Ausführungsbeispiel der Erfindung im Längsschnitt.

Wie aus den Figuren ersichtlich, sind für ein magnetisch-induktives Durchflußmeßgerät ein keramisches Meßrohr 1 zum Führen eines Mediums, dessen Durchfluß gemessen werden soll, und zwei Meßelektroden 2 vorgesehen. An die Meßelektroden 2 ist an ihrem nach außen führenden Ende jeweils eine Meßleitung 3 angeschlossen, über die die abgegriffene Spannung an eine nicht weiter dargestellte Auswerteeinrichtung geführt werden kann.

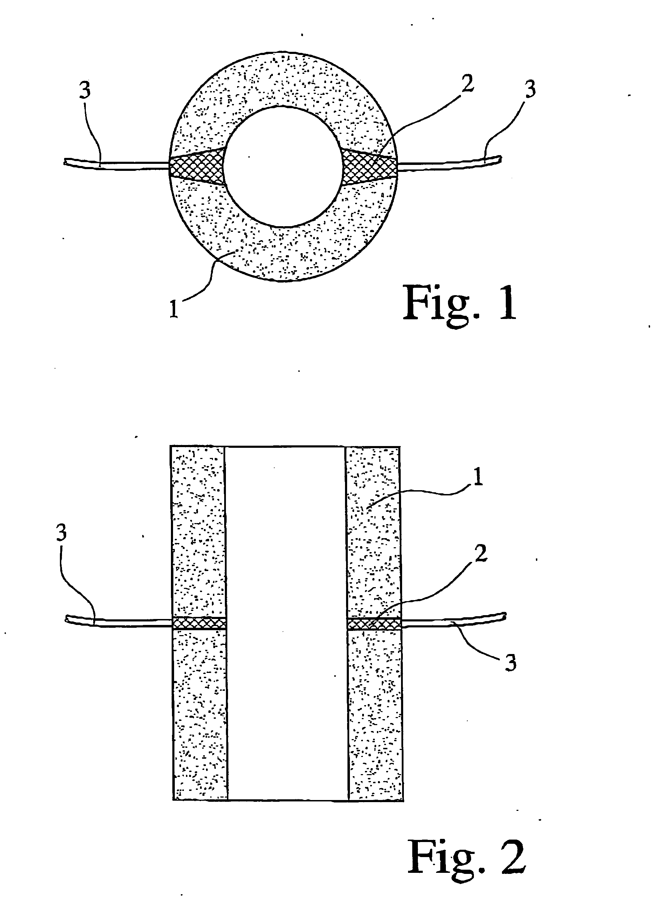

Das Meßrohr 1 besteht aus einer Keramik, vorliegend nämlich Aluminiumoxid. Als Meßelektroden 2 sind Cermet-Körper vorgesehen, die aus einer Mischung von ca. 30 Vol.-% Platin und 70 Vol.-% Aluminiumoxid bestehen. Dabei ist die Form der als Meßelektroden 2 dienenden Cermet-Körper derart, daß die Querschnittsfläche der Cermet-Körper an ihrem dem Medium und damit dem Inneren des Meßrohrs 1 zugewandten Ende größer ist als an ihrem anderen Ende. Dies erkennt man aus den Figuren insbesondere dadurch, daß gezeigt ist, daß die Cermet-Körper eine flache Form aufweisen, die in Draufsicht, also wie in Fig. 1 gezeigt, annähernd trapezförmig ist, Damit wird zum vorliegend galvanischen Abgriff einer Meßspannung eine große Querschnittsfläche des elektrisch-leitfähigen Cermet-Körpers bereitgestellt, während zum Anschließen der Meßelektroden 2 an jeweils eine Meßleitung 3 eine wesentlich geringere Querschnittsfläche ausreichend ist.

Die Herstellung des Meßrohrs gemäß dem bevorzugten Ausführungsbeispiel der Erfindung ist wie folgt: Zuerst erfolgt eine trockene Vormischung des in Pulverform vorliegenden Aluminiumoxids mit dem Platinpulver, und zwar in einem Volumenverhältnis von etwa 70 zu 30. Nach Zusatz eines organischen Bindersystems erfolgt eine Homogenisierung durch Kneten. Daraufhin wird die geknetete Masse in die Dosiereinheit einer Spritzgußmaschine eingefüllt, und es erfolgt vorerst ein Spritzgießen der Cermet-Körper für die Meßelektroden 2. Nachfolgend erfolgt in entsprechender Weise ein Umspritzen der Cermet-Körper mit der Keramikmasse für das eigentliche Meßrohr 1, das vorliegend aus Aluminiumoxid besteht.

Das zuvor beschriebene Zweikomponenten-Spritzgußverfahren weist den wesentlichen Vorteil auf, daß die Cermet-Körper für die Meßelektroden 2 direkt in ihrer endgültigen Form hergestellt werden können, so daß keine weitere Bearbeitung der Cermet-Körper erforderlich ist und insbesondere kein Materialabtrag erfolgt. Alternativ zu dem Zweikomponenten-Spritzgußverfahren ist es natürlich auch möglich, lediglich die Cermet-Körper durch Spritzgießen oder ein anderes Verfahren der plastischen Formgebung oder der Gießformgebung herzustellen, um die derart hergestellten Cermet-Körper nachfolgend in der Keramikmasse für das eigentliche Meßrohr 1 zu verpressen.

## Patentansprüche

1. Magnetisch-induktives Durchflußmeßgerät, mit einem keramischen Meßrohr (1) zum Führen eines Mediums, dessen Durchfluß gemessen werden soll, und einer Meßelektrode (2), wobei die Meßelektrode (2) einen Cermet-Körper aufweist, in der Wand des Meßrohrs (1) vorgesehen ist, auf ihrer dem Medium zugewandten Seite mit dem Medium galvanisch oder kapazitiv gekoppelt ist und auf ihrer dem Medium abgewandten Seite mit einer Meßleitung (3) verbunden ist, **dadurch gekennzeichnet, daß** die Querschnittsfläche des Cermet-Körpers an seinem dem Medium zugewandten Ende größer ist als an seinem dem Medium abgewandten Ende.

2. Magnetisch-induktives Durchflußmeßgerät nach Anspruch 1, **dadurch gekennzeichnet, daß** die Querschnittsfläche des Cermet-Körpers von seinem dem Medium zugewandten Ende zu seinem dem Medium abgewandten Ende kontinuierlich geringer wird.

3. Magnetisch-induktives Durchflußmeßgerät nach Anspruch 1 oder 2, **dadurch gekennzeichnet, daß** die Form der Querschnittsfläche des Cermet-Körpers an seinem dem Medium zugewandten Ende vieleckig, vorzugsweise im wesentlichen rechteckig, ganz besonders bevorzugt im wesentlichen quadratisch ist.

4. Magnetisch-induktives Durchflußmeßgerät nach einem der Ansprüche 1 bis 3, **dadurch gekennzeichnet, daß** der Cermet-Körper in das keramische Meßrohr (1) eingepreßt ist.

5. Magnetisch-induktives Durchflußmeßgerät nach einem der Ansprüche 1 bis 3, **dadurch gekennzeichnet, daß** der Cermet-Körper von dem keramischen Meßrohr (1) umspritzt ist.

6. Magnetisch-induktives Durchflußmeßgerät nach einem der Ansprüche 1 bis 5, **dadurch gekennzeichnet, daß** der Cermet-Körper Platin und Aluminiumoxid aufweist.

7. Magnetisch-induktives Durchflußmeßgerät nach einem der Ansprüche 1 bis 6, **dadurch gekennzeichnet, daß** das keramische Meßrohr (1) Aluminiumoxid oder/und dotiertem oder nicht dotiertem Zirkoniumoxid oder Mischungen in beliebigem Verhältnis aus diesen Komponenten besteht.

8. Magnetisch-induktives Durchflußmeßgerät nach einem der Ansprüche 1 bis 7, **dadurch gekennzeichnet, daß** zwei, vorzugsweise einander gegenüberliegende Meßelektroden (2) mit jeweils einem Cermet-Körper vorgesehen sind.

9. Verfahren zum Herstellen eines Meßrohrs für ein magnetisch-induktives Durchflußmeßgerät, mit folgenden Schritten:
- Herstellung eines Cermet-Körpers für eine Meßelektrode (2) durch plastische Formgebung oder Gießformgebung,
- Einpressen des unbearbeiteten Cermet-Körpers in eine Keramikmasse zur Herstellung des die Meßelektrode (2) aufweisenden Meßrohrs (1).

10. Verfahren zum Herstellen eines Meßrohrs für eine magnetisch-induktives Durchflußmeßgerät, mit folgenden Schritten:
- Spritzgießen eines Cermet-Körpers für eine Meßelektrode (2),
- Umspritzen des unbearbeiteten Cermet-Körpers mit einer Keramikmasse zur Herstellung des die Meßelektrode (2) aufweisenden Meßrohrs (1).
